# EUROPÄISCHE PATENTSCHRIFT

(11) **EP 1 248 810 B1**
(45) Veröffentlichungstag und Bekanntmachung des Hinweises auf die Patenterteilung: **28.06.2006**
(21) Anmeldenummer: 00987333.2
(22) Anmeldetag: 01.12.2000
(51) Int. Cl.: C08G 18/67, C09D 175/16, C09D 5/44

(54) **WÄSSRIGE ELEKTROTAUCHLACKE, DEREN HERSTELLUNG UND VERWENDUNG**
AQUEOUS ELECTRODEPOSITION PAINTS AND THE PRODUCTION AND USE THEREOF
PEINTURES POUR ELECTRODEPOSITION AQUEUSES, LEUR PRODUCTION ET LEUR UTILISATION

(30) Priorität: 04.12.1999 DE 19958488
(43) Veröffentlichungstag der Anmeldung: 16.10.2002
(73) Patentinhaber: E.I. DU PONT DE NEMOURS AND COMPANY, Wilmington, DE 19801 (US)
(72) Erfinder: FIEBERG, Andreas, 40625 Düsseldorf (DE); REKOWSKI, Volker, 44892 Bochum (DE); SAATWEBER, Dietrich, 42369 Wuppertal (DE); SIMMROCK, Hans-Ulrich, 40627 Düsseldorf (DE); VOGT-BIRNBRICH, Bettina, 42719 Solingen (DE)
(74) Vertreter: Gille Hrabal Struck Neidlein Prop Roos
(86) Internationale Anmeldenummer: PCT/EP2000/012085
(87) Internationale Veröffentlichungsnummer: WO 2001/040346

(56) Entgegenhaltungen:
- EP-A- 0 798 323
- DE-A- 4 325 094
- FR-A- 2 379 587
- GB-A- 2 270 916

## Beschreibung

Die Erfindung betrifit kathodisch abscheidbare, wäßrige Elektrotauchlacke, die durch energiereiche Strahlung härtbar sind und den Vorteil einer guten Durchhärtung auch bei hohen Schichtdicken haben und gute mechanische Eigenschaften, sowie insbesondere eine hohe Beständigkeit in der Industriegasatmosphäre ergeben. Sie betrifft auch deren Herstellung und Verwendung zum Lackieren von elektrisch leitfähigen Untergründen z.B. aus Metall, elektrisch leitendem Kunststoff, z.B. metallisierter Kunststoff, oder elektrisch leitenden Überzügen.

Nach dem Elektrotauchlackverfahren aufgebrachte Beschichtungen weisen den Vorteil auf, daß sie nur eine geringe Menge Restwasser enthalten. Die erhaltene Beschichtung muß daher nach Abspülen von noch anhaftendem Badmaterial nicht vorgetrocknet werden, sondern kann nach einem eventuellen Abblasen von Wassertropfen durch euergiereiche Strahlung ausgehärtet werden.

In der DE-A-43 25 094 werden kathodisch abscheidbare Kunstharze beschrieben, die in wässrigen Elektrotauchlacken enthalten sind. Die Elektrotauchlacke gemäß DE-A-43 25 094 enthalten ein Umsetzungsprodukt (A) und einen freie Radikale bildenden Polymerisationsinitiator (B), wobei das Umsetzungsprodukt (A) herstellbar ist, indem
(a) ein Polyisocyanat oder eine Mischung aus Polyisocyanaten mit
(b) einer organischen Verbindung, die pro Molekül sowohl mindestens eine ethylenisch ungesättigte Doppelbindung als auch mindestens ein aktives Wasserstoffatom enthält oder einer Mischung aus solchen organischen Verbindungen und
(c) einer organischen Verbindung, die pro Molekül sowohl mindestens ein aktives Wasserstoffatom als auch mindestens eine tertiäre Aminogruppe und/oder mindestens eine Ketimin- und/oder mindestens eine Aldiminigruppe enthält oder einer Mischung aus solchen organischen Verbindungen sowie gegebenenfalls
(d) einer von (b) und (c) verschiedenen organischen Verbindung, die pro Molekül mindestens ein aktives Wasserstoffatom enthält oder einer Mischung aus solchen organischen Verbindungen
in einem solchen Mengenverhältnis umgesetzt wird, dass 3 bis 80 % der NCO-Gruppcn der Komponente (a) mit der Komponente (b), 3 bis 80 % der NCO-Gruppen der Komponente (a) mit der Komponente (c) und 0 bis 94 % der NCO-Gruppen der Komponente (a) mit der Komponente (d) umgesetzt werden und das so erhaltene Umsetzungsprodukt in Wasser dispergiert wird, wobei vor, während oder nach der Dispergierung mindestens 5 % der im Umsetzungsprodukt enthaltenen tertiären und/oder primären Aminogruppen mit einer Brönstedsäure neutralisiert werden.

In der US 4,039,414 werden Zusammensetzungen für das Elektrotauchlackverfahren beschrieben, enthaltend einen Photoinitiator, dispergiert in einem ethylenisch ungesättigten Polymeren, dispergiert in wäßriger Phase, die an einer Kathode abgeschieden und mit UV-Strahlung gehärtet werden können. Es wird allgemein eine Vielzahl von acrylierten Polymeren genannt, darunter wird als einziges für ein Polyurethanacrylat ein solches beschrieben, das als Aufbaukomponenten Toluylendiisocyanat und Palyetherpoplyole verwendet. Lacke auf solcher Basis neigen zu starker Vergilbung und zu wetterbedingten frühzeitigen Abbauerscheinungen mit der Folge von Rißbildung, Glanzabfall und Kreidung, und erweisen sich auch als relativ spröde.

Es war daher die der Erfindung zugrundeliegende Aufgabe, kathodisch abscheidbare, wäßrige Elektromuchlacke bereitzustellen, die diese Mängel nicht aufweisen, die durch durch energiereiche Strahlung auch bei hohen Schichtdicken durchhärten und Lackfilme mit gegenüber dem Stand der Technik verbesserten Eigenschaften, besonders hinsichtlich der Beständigkeit in der Industriegasatmosphäre, verbesserte Elastizität und guter Haftung auf dem Substrat liefern.

Es hat sich gezeigt, daß diese Aufgabe mit dem einen Gegenstand der Erfindung bildenden kathodisch abscheidbaren wäßrigen Elektrotauchlack gelöst werden kann, der enthält
A) eine wäßrige Dispersion, die ein oder mehrere kationisch modifizierte Polyurethan(meth)acrylate (a1) mit terminalen, ethylenisch ungesättigten (meth)acrylisclten Doppelbindungen, und einen oder mehrere Reaktivverdünner (a2) mit mindestens zwei ethylenisch ungesättigten (meth)acryhischen Doppelbindungen enthält, wobei die (meth)acrylischen Doppelbindungen des Gemisches aus (a1) und (a2) einer Bromzahl von 20 bis 150 g Brom/100 g Festkörper entsprechen, und wobei die wäßrige Dispersion erhältlich ist durch Bereitung des Polyurethan(meth)acrylats (a1), durch Herstellung eines Urethanprepolymers mit terminalen NCO-Gruppen, durch Umsetzung von:
   i) einem oder mehreren aliphatischen, cycloaliphatischen, araliphatischen und/oder aromatischen Polyisocyanaten, wobei aromatische Polyisocyanate ein Molekulargewicht über 174 aufweisen,
   ii) einer oder mehreren Polyhydroxylverbindungen mit einem zahlenmittleren Molekulargewicht Mn von 400 bis 5000.
   iii) einer oder mehreren Verbindungen mit einer durch Neutralisation kationischen Gruppe und zwei gegenüber Isocyanaten funktionellen Gruppen,
   iv) gegebenenfalls einer oder mehreren Polyhydroxylverbindungen mit einem zahlenmittleren Molekulargewicht Mn von 60 bis unter 400.
   und anschließende Umsetzung des so erhaltenen Urethanprepolymers
   v) mit einer oder mehreren Verbindungen, die eine oder mehrere ethylenisch ungesättigte (meth)acrylische Gruppen und eine oder mehrere gegenüber Isocyanat reaktive Gruppe aufweisen, ausgewählt aus Hydroxyalkyl(meth)acrylaten, Aminoalkyl(meth)acrylaten und/oder (Meth)acrylamiden und/oder mit einer oder mehreren Verbindungen, die eine mit Isocyanat reaktive Gruppe und eine zur Einführung einer (meth)acrylischen Estergruppe geeignete Gruppe aufweisen und anschließende Umsetzung zur Einführung einer (meth)acrylischen Estergruppe,
   vi) und gegebenenfalls mit einer oder mehreren Verbindungen mit einer oder mehreren gegenüber Isocyanat reaktiven Gruppen, die keine (meth)acrylischen Doppelbindungen aufweisen, worauf mit dem Reaktivverdünner a2) verdünnt und unter zumindest teilweiser Neutralisation in die wäßrige Phase überführt wird,
   wobei die wäßrige Polyurethandispersion 40 bis 85 gew.-% der komponente a1) und 15 bis 60 gew.-% der komponente a2), jeweils bezogen auf den festkörpergehalt der komponente A) enthält und der Festkörpergehalt 30 bis 70 gew.-% beträgt, und
B) gegebenenfalls einen oder nlehrete Photoinitiatoren und gegebenenfalls einen oder mehrere thermisch aktivierbare Radikalinitiatoren,
   wobei die terminalen ethylenisch ungesättigten (meth)acrylischen Doppelbindungen der Polyurethan(meth)acrylate über Urethan-, Harnstoff-, Amid- oder Estergruppen mit dem kationisch modifizierten Polytiretnanprepolymeren verbunden sind,
   sowie gegebenenfalls übliche Hilfs- und Zusatzstoffe, Pigmente und/oder Füllstoffe.

Unter (Meth)acryl soll hier Acryl und/oder Methacryl verstander werden.

Die wäßrige kationische Polyurethandispersion (A) hat beispielsweise einen Festkörper gehalt (Polyurethan(meth)acrylat plus Reaktivverdünner) von bevorzugt von 40 bis 55 Gew.-%. Ihr Gehalt an terminalen ethylenisch ungesättigten (meth)acsylischen Doppelbindungen entspricht einer Bromzahl von 20 bis 150, bevorzugt bei 20 bis 80 g Brom/100 g Festkörper (Polyurethan(meth)acrylat plus Reaktivverdünner).

Die wäßrige Dispersion (A) wird nach dem folgenden Verfahren hergestellt:

Zuerst wird ein kationisch modifiziertes Urethanprepolymer mit terminalen NCO-Gruppen hergestellt, indem man
i) ein oder mehrere aliphatische, cycloaliphatische, araliphatische und/oder aromalische Polyisocyanate, wobei die aromatischen Polyisocyanate bevorzugt ein Molekulargewicht über 174 aufweisen,
ii) eine oder mehrere höhermolekulare Polyhydroxylverbindung(en) mit einem zahlenmittleren Molekulargewicht (Mn) von beispielsweise 400 bis 5000, bevorzugt von 1000 bis 2500,
iii) eine oder mehrere Verbindung(en), die eine durch Neutralisation kationische Gruppe und zwei gegenüber Isocyanaten reaktive Gruppen aufweisen und
iv) gegebenenfalls eine oder mehrere niedermolekulare Polyhydroxylverbindungen, beispielsweise mit einem zahlenmittleren Molekulargewicht (Mn) von 60 bis unter 400 umsetzt.

Die Lhnsetzung kann beispielsweise in einem Ein- oder Mehrstufenverfabren lösemittelfrei oder in einem polaren, gegenüber NCO-Gruppen inerten Lösemittel erfolgen.

Die Mengen der Komponenten (i) bis (iv) werden dabei beispielsweise so gewählt, daß das Verhältnis von NCO-Gruppen zu OH-Gruppen zwischen 4 : 1 bis 1,1 : 1 liegt.

Danach werden an die freien NCO-Gruppen die ethylenisch ungesättigten Gruppen angelagert. Das geschieht durch Umsetzung mit Verbindungen (v), die eine oder mehrere ethylenisch ungesättigte (meth)acrylische Gruppen und eine oder mehrere gegenüber Isocyanaten reaktive Gruppe aufweisen, wobei die stöchiometrischen Verhältnisse von gegenüber NCO-Gruppen reaktiven Gruppen zu Isocyanatgruppen so gewählt werden, daß keine freien NCO-Gruppen verbleiben.

Zur Regulierung der Funktionalität (Anzahl der ethylenisch ungesättigten (meth)acrylischen Doppelbindungen) können auch Verbindungen (vi) mitverwendet werden, die eine oder mehrere, bevorzugt eine gegenüber Isocyanaten reaktive Gruppen aufweisen, aber keine (meth)acrylischen Doppelbindungen enthalten. Sie können andere ethylenisch ungesättigte Doppelbindungen enthalten oder frei davon sein. Die Verbindungen (vi) können beispielsweise im Anschluß an die Umsetzung der Komponenten (i) bis (iv) zur Herstellung eines Uretbanprepolymers vor, zusammen mit oder nach Umsetzung mit der Komponente (v) einreagiert werden.

Die freien NCO-Gruppen können aber zunächst auch mit Verbindungen umgesetzt werden, die neben einer gegenüber Isocyanaten reaktiven Gruppe eine oder mehrere andere reaktive Gruppen enthalten, die wiederum mit komplementär reaktiven Gruppen von ethylenisch ungesättigten (meth)acrylischen Verbindungen reagieren können, wie beispielsweise Hydroxycarbonsäure mit Glycidyl(meth)acrylat. Auf diese Weise können beispielsweise über Estergruppen mit dem Polyurethanprepolymeren verbundene (meth)acrylische Doppelbindungen eingeführt werden.

Die kationisch modifizierten Polyurethan(meth)acrylate mit terminalen ethylenisch ungesättigten (meth)acrylischen Doppelbindungen (a1) weisen beispielsweise ein zahlenmittleres Molekulargewicht Mn von 800 bis 5000 und/oder ein gewichtsmittleres Molekulargewicht Mw von 5000 bis 20000, bevorzugt unter 20000 auf. Ihre Aminzahl beträgt bevorzugt von 5 bis 80, besonders bevorzugt von 10 bis 60. Ihr Gehalt an terminalen ethylenisch ungesättigten (meth)acrylischen Doppelbindungen beträgt bevorzugt von 4 bis 80 g Brom/100 g Festharz, besonders bevorzugt von 5 bis 35 g Brom/100 g Festharz.

Die, wie vorstehend beschrieben, erhältliche Komponente (a1) wird mit dem Reaktivverdünner (a2) verdünnt, zumindest teilweise neutralisiert und in die wäßrige Phase überführt. Dabei liegen bevorzugt mindestens 25 % der Aminogruppen in neutralisierter Form vor. Das Neutralisationsmittel kann vor oder mit dem Wasser zugegeben werden, es kann aber auch in dem Wasser vorgelegt werden, in welches das Polymere dispergiert wird. Ein Zusatz von externen Emulgatoren ist dabei nicht erforderlich- Zur Überführung in die wäßrige Phase werden beispielsweise schnellaufende Rührscheibengeräte, Rotor-/Stator-Mischer oder Hochdruckhomogenisatoren verwendet. Anschließend wird das inerte Lösungsmittel gegebenenfalls unter Anlegen von Vakuum abdestilliert.

Der Reaktiverdünner (a2) kann aber auch nachträglich in die bereits wäßrige Dispersion zugegeben werden. Dabei wird die wäßrige Dispersion wie vorstehend beschrieben hergestellt, wobei zunächst die Komponente (a1) noch nicht mit dem Reaktiwerdünner (a2) oder nur mit einem Teil des Reaktiwerdünners (a2) verdünnt wird.

Als Polyisocyanate (i) eignen sich beliebige organische Di- und/oder Polyisocyanate mit aliphatisch, cycloaliphatisch, araliphatisch und/oder aromatisch gebundenen freien Isocyanatgruppen, die im Mittel mehr als eine, bevorzugt zwei Isocyanatgruppen pro Molekül aufweisen. Bevorzugt sind aliphatisch, cycloaliphatisch und/oder araliphatisch gebundene Di- und/oder Polyisocyanate. Aromatische Diisocyanate weisen ein Molekulargewicht von über 174 auf.

Bevorzugt werden Polyisocyanate, die etwa 3 bis 36, besonders bevorzugt 8 bis 15 Kohlenstoffatome enthalten. Beispiele für geeignete Diisocyanate sind Diphenylmethandiisocyanat und insbesondere Hexamethylendiisocyanat, Tetramethylxylylendiisocyanat, Isophorondiisocyanat, Dicyclohexylmethandiisocyanat, Cyclohexandiisocyanat und deren Mischungen.

Sehr gut geeignet sind beispielsweise die sogenannten "Lackpolyisocyanate" auf Basis von Hexamethylendiisocyanat, Isophorondiisocyanat und/oder Dicyclohexylmethandiisocyanat, wobei es sich dabei um die an sich bekannten Biuret-, Urethan-, Uretdion- und/oder Isocyanuratgruppen aufweisende Derivate dieser Diisocyanate handelt.

Beispiele für geeignete höhermolekulare Polyhydroxylverbindungen (ii) sind lineare oder verzweigte Polyole, beispielsweise mit einer OH-Zahl von 30 bis 150. Bevorzugt handelt es sich dabei um gesättigte Polyester- und/oder Polyetherdiole und/oder Polycarbonatdiole und/oder sogenannte Dimerfettalkohole und/oder Poly(meth)acrylatdiole, jeweils mit einer zahlenmittleren Molmasse Mn von 400 bis 5000, beispielsweise 500 bis 5000 oder Mischungen davon.

Geeignete lineare oder verzweigte Polyetherdiole sind beispielsweise Poly(oxyethylen)glykole, Poly(oxypropylen)glykole und/oder Poly(oxybutylen)glykole wie z. B. Terathane®-Typen der Firma Dupont.

Polyesterdiole sind bevorzugt und können in bekannter Weise durch Veresterung von Dicarbonsäuren oder ihren Anhydriden mit Diolen hergestellt werden. Um verzweigte Polyester herzustellen können in geringem Umfang auch Polyole oder Polycarbonsäuren mit höherer Funktionalität eingesetzt werden.

Als geeignete Verbindungen (iii) werden Verbindungen eingebracht, die zwei mit Isocyanat reagierende Gruppen, z.B. H-aktive Gruppen und mindestens eine zur Kationenbildung befähigte Gruppe enthalten. Geeignete, mit Isocyanatgruppen reagierende Gruppen sind insbesondere Hydroxylgruppen. Gruppen die zur Kationenbildung befähigt sind, sind beispielsweise Aminogruppen. Beispiele für solche Verbindungen sind Alkyl- oder Dialkylaminodialkohole mit beispielsweise 1 bis 8 C-Atomen im Alkylteil, wobei die Dialkohole aliphatisch, cycloaliphatisch oder aromatisch sein können, wobei aliphatische Dialkohole beispielsweise 2 bis 18 und cycloaliphatische beispielsweise 5 bis 14 C-Atome aufweisen oder Triamine mit einer tert. Aminogruppe wie beispielsweise Diethylaminopropandiol, Methyldiethanolamin, N,N-Diethylaminomethylamin oder Ketimin-blockierte Triamine, wie beispielsweise Ketimin-blockiertes Diethylentriamin. Gegebenenfalls können auch Aminotriole, wie z.B. Triethanolamin eingesetzt werden.

Beispiele für geeignete niedermolekulare Polyhydroxylverbindungen (iv) haben bevorzugt eine zahlenmittlere Molmasse Mn von 60 bis unter 500, beispielsweise von 60 bis unter 400 und können aliphatische, alicyclische und/oder aromatische Gruppen enthalten. Geeignete niedermolekulare Polyhydroxylverbindungen sind beispielsweise Diole, Triole oder Polyole wie Ethylenglykol, Diethylenglykol, Triethylenglykol, 1,2-Propandiol. 1,3-Propandiol, 1,4-Butandiol, 1,2-Butylenglykol, 1,6-Hexandiol, Trimethylolpropan, Ricinusöl oder hydriertes Ricinusöl, Pentaerythrit, 2-Cyclohexandiol, 1,4-Cyclohexandimethanol, Bisphenol A, Bisphenol F, Neopentylglykol, Hydroxypivalinsäureneopentylglykolester, hydroxyethyliertes Bisphenol A, hydriertes Bisphenol A sowie Mischungen aus diesen Polyolen.

Geeignete Verbindungen (v), die eine oder mehrere ethylenisch ungesättigte (meth)acrylische Gruppen und eine oder mehrere gegenüber Isocyanaten reaktive Gruppen aufweisen, enthalten als reaktive Gruppen Hydroxyl-, Amino- und/oder Amidgruppen. Über die hydroxylgruppenhaltigen Verbindungen (v) werden über Urethangruppen gebundene (meth)acrylische Doppelbindungen in das Polyurethanprepolymere eingeführt; Aminogruppen enthaltende Verbindungen (v) führen zur Bindung über Harnstoffgruppen; Amidgruppen enthaltende Verbindungen (v) führen zur Bindung über "Amidgruppen", wobei insbesondere α-Ketoharnstoff-Gruppen ausgebildet werden.

Beispiele hydroxylgruppenhaltiger Verbindungen (v) sind Hydroxy(meth)acrylate, wie beispielsweise hydroxylgruppenhaltige Ester der Acrylsäure und/oder Methacrylsäure mit 2 bis 12, bevorzugt 2 bis 6 C-Atomen im Hydroxyalkylrest wie beispielsweise 2-Hydroxyethyl(meth)acrylat, 3-Hydroxypropyl(meth)acrylat, 4-Hydroxybutyl(meth)acrylat, 5-Hydroxypentyl(meth)acrylat, 6-Hydroxyhexyl(meth)acrylat, 7-Hydroxyheptyl(meth)acrylat, 8-Hydroxyoctyl(meth)acrylat sowie die entsprechenden isomeren Verbindungen, 2-Hydroxy-1-methylethyl(meth)acrylat, 1,3-Dimethyl-3-hydroxybutyl(meth)acrylat und andere; Umsetzungsprodukte von (Meth)acrylsäure mit Polyolen wie z.B. Glycerindiacrylat, Trimethylolpropandiacrylat, Pentaerythrittriacrylat; Preaddukte aus Glycidylmethacrylat und Hydroxycarbonsäuren wie z.B. Glykolsäure; Umsetzungsprodukte aus Hydroxy(meth)acrylaten mit ∈-Caprolacton; Umsetzungsprodukte aus (Meth)acrylsäure mit dem Glycidylester einer Carbonsäure mit einem tertiären α-C-Atom wie z.B. Cardura® der Firma Shell.

Beispiele für aminogruppenhaltige Verbindungen sind Amino(meth)acrylate wie beispielsweise tert.-Butylaminoethyl(meth)acrylat, (Meth)acrylsäure-β-ureido-ethylester oder Umsetzungsprodukte aus (Meth)acrylsäurechlorid und Diaminen.

Beispiele für Verbindungen mit Amidgruppen sind (Meth)acrylamid, N-Methylol(meth)acrylamid, Isobutylmethylol(meth)acrylamid.
Die Verbindungen (v) können einzeln oder als Mischungen verwendet werden.

Geeignete Verbindungen (vi) zur Regulierung der Funktionalität sind beispielsweise höhere Glykolether und/oder Fettalkohole und/oder Fettamine. Dabei können beispielsweise ein oder mehrere aliphatische C₄ - C₃₆-Alkohole und/oder -Amine eingesetzt werden, deren Umsetzung dann in der Regel unter vollständigem Verbrauch ihrer OH-, NH-, oder NH₂-Gruppen erfolgt. Fettamine und/oder Fettalkohole mit mehr als 12 C-Atomen sind bevorzugt. Beispiele sind Laurylalkohol, Stearylalkohol sowie die entsprechenden Amine.
Als Reaktivverdünner (a2) eignen sich ethylenisch ungesättigte, insbesondere niedermolekulare und oligomolekulare Verbindungen. Die Reaktivverdünner weisen im Gegensatz zur Polyurethan(meth)acrylat-Komponente (a1) üblicherweise keine kationischen Modifizierungen auf. Die niedermolekularen und/oder oligomolekularen Reaktivverdünner können beispielsweise errechnete Molekulargewichte in der Größenordnung von bis zu 10000, z.B. 100 bis 10000 aufweisen. Geeignete Reaktivverdünner sind beispielsweise Di- und Poly(meth)acrylate von Glykolen mit 2 bis 6 C-Atomen und Polyolen mit 3 bis 4 OH-Gruppen und 3 bis 6 C-Atomen, wie Ethylenglykoldiacrylat, Propandiol-1,3-diacrylat, Butandiol-1,4-diacrylat, Hexandiol-1,6-diacrylat, Trimethylolpropantriacrylat, Pentaerythrittriacrylat, Pentaerythrittetraacrylat sowie entsprechende Methacrylate, ferner Di(meth)acrylate von Polyetherglykolen des Glykols, Propandiol-1,3, Butandiol-1,4, tetraethoxyliertes Trimethylolpropantriacrylat und/oder Oligourethan(meth)acrylate mit 2 bis 6 ethylenisch ungesättigten Doppelbindungen. Es können auch Mischungen eingesetzt werden.

Als Neutralisationsmittel eignen sich übliche anorganische Säuren wie beispielsweise Salzsäure, Schwefelsäure, schweflige Säure, Phosphorsäure, Chromsäure, bevorzugt werden jedoch organische Säuren, insbesondere Monocarbonsäuren wie beispielsweise Ameisensäure, Essigsäure, Propionsäure und insbesondere Hydroxycarbonsäuren wie beispielsweise, Milchsäure, Glykolsäure, Diglykolsäure, Apfelsäure, Zitronensäure, Mandelsäure, Weinsäure, Hydroxypropionsäure, Dimethylolpropionsäure. Es können auch Mischungen derartiger Neutralisationsmittel verwendet werden.

Durch die Auswahl der Neutralisationsmittel kann die Stabilität der Dispersion in dem Fachmann geläufiger Weise beeinflußt werden. Die Menge an Neutralisationsmittel wird im allgemeinen so gewählt, daß mindestens 25 % der ionischen Gruppen in Salzform vorliegen.

Die erfindungsgemäßen Elektrotauchlacke können gegebenenfalls einen oder mehrere Photoinitiatoren und/oder gegebenenfalls einen oder mehrere thermisch aktivierbare Radikalinitiatoren enthalten. Bevorzugt werden die erimdungsgemäßen Elektrotauchlacke in Gegenwart von Photoinitiatoren ausgehärtet, die Aushärtung kann jedoch auch ohne Photoinitiatoren erfolgen.

Als geeignete Photoinitiatoren (B) können alle für radikalisch härtende Systeme üblichen Initiatoren eingesetzt werden, beispielsweise solche, die im Wellenlängenbereich von 190 bis 600 nm absorbieren.

Beispiele sind Acetophenon und -derivate, Benzophenon und -derivate, Benzil, Michler's Keton, Thioxanthon und -derivate, Anthron, Anthrachinon und -derivate; Benzoin und -derivate, Benzoinether und -derivate, Dialkoxyacetophenone, Acyloximester, Benzilketale, Hydroxyalkylphenone; phosphororganische Verbindungen, wie z.B. Acylphosphinoxide; Halogenketone. Die Photoinitiatoren werden in üblichen Mengen z.B. von 0,1 bis 20 Gew.-%, bevorzugt 0.1 bis 5 Gew.-%, bezogen auf die Summe von radikalisch polymerisierbaren Polymeren (a1) und Reaktivverdünner (a2), eingesetzt. Die Photoinitiatoren können einzeln oder in Kombination eingesetzt werden.

Neben den erwähnten Photoinitiatoren können sogenannte Photoaktivatoren, wie z.B. tertiäre Amine zugesetzt werden. Mit derartigen Kombinationen werden zuweilen synergistische Wirkungen erzielt.

In einer weniger bevorzugten Ausführungsform wird die Aushärtung ohne Photoinitiatoren durchgeführt.

Der erfindungsgemäße kathodisch abscheidbare wäßrige Elektrotauchlack kann neben der wäßrigen Dispersion (A) und dem Photoinitiator (B) übliche Lackhilfsmittel und Zusatzstoffe wie z.B. Biozide, Lichtschutzmittel, Verlaufsmittel und gegebenenfalls Pigmente und/oder Füllstoffe enthalten.

Bei den Pigmenten und Füllstoffen handelt es sich dabei um die üblichen in der Lackindustrie einsetzbaren Füllstoffe und anorganischen oder organischen farb- und/oder effektgebenden Pigmente und Korrosionsschutzpigmente. Beispiele für anorganische und organische farbgebende Pigmente sind Titandioxid, mikronisiertes Titandioxid, Zinksulfid, Lithopone, Bleicarbonat, Bleisulfat, Zinnoxid, Antimonoxid, Eisenoxide, Chromgelb, Nickeltitangelb, Chromorange, Molybdatrot, Mineralviolett, Ultramarinviolett, Ultramarinblau, Kobaltblau, Chromoxidgrün, Ruß, Azo-, Phthalocyanin-, Chinacridon-, Perylen-, Perinon-, Anthrachinon-, Thioindigo- und Diketopyrrolopyrrolpigmente. Beispiele für Effektpigmente sind Metallpigmente, beispielsweise aus Aluminium, Kupfer oder anderen Metallen; Interferenzpigmente wie beispielsweise metalloxidbeschichtete Metallpigmente oder metalloxidbeschichtete Glimmer; Perlglanzpigmente und optisch variable Pigmente (OVP).

Beispiele für Füllstoffe sind Calziumcarbonat, Bariumsulfat, Talkum, Siliziumdioxid, Aluminiumsilikate, Magnesiumsilikate, Glimmer, Aluminiumhydroxyd und Kieselsäuren. Die Füllstoffe können auch mit organischen Verbindungen modifiziert (gecoatet) sein, wobei die organischen Verbindungen auch UV-härtbare Gruppen enthalten können. Beispiele für derartige modifizierte Füllstoffe sind gecoatetes mikronisiertes Aluminiumoxid oder gecoatetes mikronisiertes Silziumdioxid.

Der erimdungsgemäße kathodisch abscheidbare wäßrige Elektrotauchlack kann auch weitere hydrophile und/oder hydrophobe Polymere mit oder ohne reaktiven Gruppen, wie beispielsweise Hydroxyl-, Amino- und andere Gruppen oder Mischungen dieser Polymeren enthalten, die ggf. auch thermisch vemetzt werden können.

Beispiele für solche Polymere sind gesättigte oder ungesättigte Acrylat- oder Polyesterharze, acrylmodifizierte Acrylat- oder Polyesterharze, Epoxidharze, Aminoplastharze, Phenolharze und blockierte Polyisocyanate.

Die Herstellung des Elektrotauchlackes erfolgt durch Mischen der Komponenten (A) und (B) und gegebenenfalls weiterer Lackhilfs- und Zusatzstoffe beispielsweise unter Zuhilfenahme üblicher Mischaggregate wie z.B. (schnellaufende) Rührwerke, statische Mischer, Rotor-/Stator-Mischer und anderer Homogenisatoren.

Die gegebenenfalls mitverwendeten Pigmente und/oder Füllstoffe werden in bekannter Weise in einem Teil der Komponente (A) oder einem speziellen Pastenharz nach üblichen Dispergierverfahren zu einer Pigmentpaste verarbeitet, welche den Komponenten (A) und (B) wie oben beschrieben zugemischt wird.

Im Falle der Erstbefüllung eines Elektrotauchlackbades kann der so hergestellte Elektrotauchlack gegebenenfalls mit weiterem Neutralisationsmittel auf den gewünschten Bad-MEQ-Wert und mit vollentsalztem Wasser auf den gewünschten Badfestkörper eingestellt werden. Der MEQ-Wert ist ein Maß für den Gehalt an Neutralisationsmittel in einem Wasserlack. Er ist definiert als die Menge an Milliequivalenten des Neutralisationsmitttels bezogen auf 100 g Festkörper.

Im Falle der Nachkompensation können die Aminogruppen der Komponente (A) nur teilweise neutralisiert werden um das bei der Abscheidung freiwerdende Neutralisationsmittel zu kompensieren.

Der Bad-MEQ-Wert beträgt beispielsweise 15 bis 70, bevorzugt 20 bis 45 Milliequivalent Neutralisationsmittel, z.B. Säure/100 g Festkörper, der BadFestkörper beträgt 5 bis 25 %, bevorzugt 8 bis 18 %.

Der erfindungsgemäße Elektrotauchlack eignet sich zur Beschichtung von Werkstücken mit elektrisch leitender Oberfläche, z.B. Metall, elektrisch leitendem (z.B. metallisiertem) Kunststoff, elektrisch leitendem Holz oder elektrisch leitenden Überzügen (z.B. Lacke), beispielsweise zur Grundierung und/oder Einschichtlackierung von Haus- und Elektrogeräten, Stahlmöbeln, Bauelementen und Landmaschinen- und Automobilzubehörteilen sowie Automobilkarossen, insbesondere zur Klarlackbeschichtung von Aluminium, wie beispielsweise von vorbehandelten Aluminiumprofilen, sowie zur Versiegelung von leitfähigen Schichten (z.B. Elektrotauchlackschichten).

Die mit dem erfindungsgemäßen Elektrotauchlack erstellten Schichten können aber auch in üblicher Weise mit weiteren Lackschichten zu einem Mehrschichtaufbau versehen werden.

In einer geeigneten Beschichtungsanlage wird das zu beschichtende Subtrat in das mit dem erfindungsgemäßen Elektrotauchlack befüllte Elektrotauchlackbad eingetaucht und gegenüber einer Gegenelektrode in einem Gleichstromkreis als Kathode geschaltet. Derartige Beschichtungsanlagen sind dem Fachmann bekannt und beispielsweise in "Glasurithandbuch" 1984, Seiten 374 bis 384 beschrieben.

Beispielsweise wird bei einer Beschichtungstemperatur von 15 bis 30°C, bevorzugt von 18 bis 22°C bei einer Gleichspannung von 50 bis 500 Volt, bevorzugt von 100 bis 300 Volt bei einer Beschichtungszeit von 1 bis 5 Minuten, bevorzugt von 2 bis 3 Minuten ein Film bis zu Schichtdicken von 60 µm, bevorzugt zwischen 10 und 50 µm abgeschieden.

Die Abscheidung kann sowohl im Taktverfahren als auch im Durchlaufverfahren erfolgen.

Der abgeschiedene Film wird durch Abspülen mit Ultrafiltrat und/oder vollentsalztem Wasser von anhaftendem Badmaterial befreit, und durch Abblasen in einem gegebenenfalls erwärmten Luftstrom oder durch unterstütztes Ablüften mit einem IR-Strahler von anhängenden Wassertropfen befreit und zur Härtung einer energiereichen Strahlung, wie einer Elektronenstrahlung bevorzugt UV-Strahlung ausgesetzt.

Für die Strahlenhärtung der erfindungsgemäßen Beschichtungsmittel können beliebige bekannte Strahlungsquellen verwendet werden. Geeignet sind beispielsweise UV-Strahlungsquellen mit Emissionen im Wellenlängenbereich von 180 bis 420 nm., insbesondere von 200 bis 400 nm. Beispiele für solche UV-Strahlungsquellen sind Quecksilberhochdruck-, Mitteldruck- und Niederdruckstrahler, Gasentladungsröhren wie z.B. Xenondampf, Xenon-/Quecksilberdampf-, Germaniumdampf(niederdruck)-Lampen, UV-Licht emittierende Dioden, UV-Licht emittierende Laser. Die Bestrahlung kann auch mit gepulster Strahlung, beispielsweise mit gepulster UV-Strahlung erfolgen. Als Strahlungsquellen werden besonders bevorzugt sogenannte Hochenergieelektronenblitzeinrichtungen (UV-Blitzlampen) eingesetzt, wie sie beispielsweise in der WO-A-94 11 123 oder der EP-A-525 340 beschrieben und im Handel erhältlich sind.

Die Bestrahlungsdauer liegt beispielsweise im Bereich von 1 Millisekunde bis 30 Minuten, je nach Lacksystem und Strahlungsquelle. Der Abstand der Strahlungsquelle zur zu bestrahlenden Substratoberfläche beträgt beispielsweise 2 bis 50 cm, bevorzugt 5 bis 10 cm. Die Bestrahlungsdauer wird so gewählt, daß eine möglichst vollständige Aushärtung erreicht wird, d.h. die Ausbildung der geforderten technologischen Eigenschaften gewährleistet ist. Dazu kann die zu bestrahlende Substratoberfläche mehrmals an der Strahlungsquelle vorbeigeführt werden, oder bei der bevorzugten Verwendung von UV-Blitzlampen kann die Bestrahlung mit einer mehrfachen Blitzentladung erfolgen. Die Blitze können beispielsweise alle 4 Sekunden ausgelöst werden, da die UV-Blitzlampen keiner Einbrennzeit bedürfen.

Zur Vermeidung von Strahlungsaustritt sind die Strahlungsquellen gegenüber der Umgebung abgeschirmt.

Zusätzlich ist es möglich, eine thermische Aktivierung zur Vernetzung der erfindungsgemäßen Beschichtungsmittel anzuwenden, um Stellen, die nur in unzureichender Weise der Strahlung ausgesetzt werden können, auszuhärten.

Dazu kann es vorteilhaft sein, übliche thermisch aktivierbare Radikalinitiatoren mitzuverwenden, so daß im Anschluß an die Bestrahlung oder gleichzeitig mit der Bestrahlung eine thermisch aktivierte radikalische Polymerisation abläuft.

Beispiele für thermisch aktivierbare Radikalinitiatoren sind organische Peroxide, organische Azoverbindungen oder C-C-spaltende Initiatoren wie beispielsweise Dialkylperoxide, Peroxocarbonsäuren, Peroxidcarbonate, Peroxidester, Hydroperoxide, Ketonperoxide, Azodinitrile oder Benzpinakolsilylether.

Die thermisch aktivierbaren Radikalinitiatoren können auch im Gemisch eingesetzt werden. Die bevorzugten Einsatzmengen liegen bei 0,1 bis 5 Gew.-%, bezogen auf die Summe der radikalisch polymerisierbaren Komponenten (a1) und (a2).

Die mit dem erfindungsgemäßen wäßrigen Elektrotauchlack abgeschiedenen und ausgehärteten Filme zeichnen sich durch einen hohen Glanz und sehr gute Haftung und gute Kantenabdeckung aus. Neben hoher Kratzfestigkeit weisen sie ausgezeichnete Beständigkeiten gegen Säuren, Laugen und Lösemitttel sowie gegen Industrieatmosphäre, insbesondere saure Abgase, wie Schwefeldioxid, insbesondere in feuchter Atmosphäre auf, was sich beispielsweise durch den Kesternichtest (DIN bzw.

ISO 3231) belegen läßt.

Weitere Vorteile sind ein vollautomatisiertes Verfahren, hoher Auftragswirkungsgrad, abfallarme Durchführbarkeit durch geschlossene Kreisläufe, lösemittelarme oder lösemittelfreie Arbeitsweise, extrem kurze Härtungszeiten und geringe thermische Belastung der zu lackierenden Substrate.

### Beispiel 1:

In einem Reaktionsgefäß mit Rührer, Thermometer und Rückflußkühler werden 400,2 g Aceton, 133,0 g Diethylaminopropandiol und 849,8 g eines Polyesterdiols aus Neopentylglykol, Adipinsäure und Isophthalsäure (OHZ = 106 mg KOH/g FH) vorgelegt und mit 510,4 g Isophorondiisocyanat bei 60°C umgesetzt, bis ein NCO-Gehalt von 1,7 % erreicht ist.

Zu der so erhaltenen NCO-Prepolymerlösung werden 106,6 g Hydroxyethylacrylat zugegeben und bei 60°C gerührt, bis der NCO-Gehalt unter 0,2 % gefallen ist.

551,0 g des so erhaltenen Polyurethanacrylates werden mit 188,9 g Trimethylolpropantriacrylat verdünnt, mit 58,7 g 50%iger Ameisensäure neutralisiert und nach 1 Stunde rühren bei 60°C in 1194,6 g vollentsalztem Wasser dispergiert. Das Aceton wird durch eine Vakuumdestillation entfernt.

Die so erhaltene Dispersion hat einen Festkörpergehalt (30 Minuten 150°C) von 35 % und einen Gehalt an Doppelbindungen von 63 g Brom/100 g Festkörper.

In 857,1 Gew.-Teilen der Dispersion werden 9,0 Gew.-Teile 2-Hydroxy-2-methyl-1-phenylpropanon dispergiert. Anschließend wird mit 1133,9 Gew.-Teilen vollentsalztem Wasser verdünnt.

In dem so erhaltenen Elektrotauchlackbad werden zinkphosphatierte Stahlbleche bei einer Badtemperatur von 25°C 2 Minuten bei einem Vorwiderstand von 200 Ohm mit 100 bis 200 Volt beschichtet.

Der abgeschiedene Film wird mit Wasser abgespült und durch Abblasen mit Preßluft von anhängenden Wassertropfen befreit. Anschließend wird er auf einer Bandanlage mit 2 UV-Strahlern (80 W/cm) bei einer Bandgeschwindigkeit von 3 x 3 m gehärtet. Die gehärteten Filme haben eine Schichdicke von 15 bis 30 µm, sind hochglänzend und zeigen einen sehr guten Verlauf.

An den ausgehärteten Filmen mit 20 µm Schichtdicke wurden verschiedene Prüfungen durchgeführt; die Ergebnisse für Erichsentiefung, Gitterschnitt-Test und Chemikalienbeständigkeit sind nachstehend aufgeführt.

| | |
|---|---|
| Erichsentiefung nach EN-ISO 1520: | 9 - 10 mm |
| Gitterschnitt nach EN-ISO 2409: | keine Ablösung |

Chemikalienbeständigkeit von Kraftfahrzeuglacken in Anlehnung an VDA-Prüfblatt 621-412:
10 Minuten Xylol keine Quellung oder Ablösung
60 Sekunden Aceton keine Quellung oder Ablösung.

## Patentansprüche

1. Wäßriger, kathodisch abscheidbarer Elektrotauchlack, enthaltend
A) eine wäßrige Dispersion, die ein oder mehrere kationisch modifizierte Polyurethan(meth)acrylate (a1) mit terminalen, ethylenisch ungesättigten (meth)acrylischen Doppelbindungen, und einen oder mehrere Reaktivverdünner (a2) mit mindestens zwei ethylenisch ungesättigten (meth)acrylischen Doppelbindungen enthält, wobei die (meth)acrylischen Doppelbindungen des Gemisches aus (a1) und (a2) einer Bromzahl von 20 bis 150 g Brom/100 g Festkörper entsprechen, und wobei die wäßrige Dispersion erhältlich ist durch Bereitung des Polyurethan(meth)acrylats (a1), durch Herstellung eines Uretharprepolymers mit terminalen NCO-Gruppen, durch Umsetzung von:
i) einem oder mehreren aliphätischen, cycloaliphatischen, araliphatischen und/oder aromatischen Polyisocyanaten, wobei aromatische Polyisocyanate ein Molekulargewicht über 174 aufweisen,
ü) einer oder mehreren Polyhydroxylverbmdungen mit einem zahlenmittleren Molekulargewicht: Mn von 400 bis 5000,
iü) einer oder mehreren Verbindungen mit einer durch Neutralisation kationischen Gruppe und zwei gegenüber Isocyanaten funktionellen Gruppen.,
iv) gegebenenfalls einer oder mehreren Polyhydroxylverbindungen mit einem zahlenmittleren Molekulargewicht Mn von 60 bis unter 400,
und anschließende Umsetzung des so erhaltenen Urethanprepolymers
v) mit einer oder mehreren Verbindungen, die eine oder mehrere ethylenisch ungesättigte (meth)acrylische Gruppen und eine oder mehrere gegenüber Isocyanat reaktive Gruppe aufweisen, ausgewählt aus Hydroxyalkyl(meth)acrylaten, Aminoalkyl(meth)acrylaten und/oder (Meth)acrylamiden und/oder mit einer oder mehreren Verbindungen, die eine mit Isocyanat reaktive Gruppe und eine zur Einführung einer (meth)acrylischen Estergruppe geeignete Gruppe aufweisen und anschließende Umsetzung zur Einführung einer (meth)acrylischen Estergruppe,
vi) und gegebenenfalls mit einer oder mehreren Verbindungen mit einer oder mehreren gegenüber Isocyanat reaktiven Gruppen, die keine (meth)acrylischen Doppelbindungen aufweisen, worauf mit dem Reaktivverdünner a2) verdünnt. und unter zumindest teilweiser Neutralisation in die wäßrige Phase überführt wird,
wobei die wäßrige Polyurethandispersion 40 bis 85 Gew.-% der Komponente a1) und
15 bis 60 Gew.-% der Komponente a2), jeweils bezogen auf den Festkörpergehalt der Komponente A) enthält und der Pestkötpergebalt 30 bis 70 Gew.- % beträgt
B) gegebenenfalls einen oder mehrere Photoinitiatoren und gegebenenfalls einen oder mehrere thermisch aktivierbare Radikalinitiatoren,
wobei die terminalen ethylenisch ungesättigten (meth)acrylischen Doppelbindungen der Polyurethan(meth)acrylate über Urethan-, Harnstoff-, Amid- oder Estergruppen mit dem kationisch modifizierten Polyurethanprepolymeren verbunden sind,
sowie gegebenenfalls übliche Hilfs- und Zusatzstoffe, Pigmente und/oder Füllstoffe.

2. Elektrotauchlack nach Anspruch 1, **dadurch gekennzeichnet, daß** die Bromzahl der Komponente (a1) 4 bis 80 g Brom/100 g Festharz beträgt.

3. Verfahren zur Herstellung einer für Elektrotauchlacke nach einem der Ansprüche 1 oder 2 geeigneten wäßrigen Dispersion A), **dadurch gekennzeichnet, daß** ein Urethanprepolymeres mit terminalen NCO-Gruppen hergestellt wird durch Umsetzung von
i) einem oder mehreren aliphatischen, cycloaliphatischen, araliphatischen und/oder aromatischen Polyisocyanaten, wobei aromatische Polyisocyanate ein Molekulargewicht über 174 aufweisen,
ii) einer oder mehreren Polyhydroxylverbindungen mit einem zahlenmittleren Molekulargewicht Mn von 400 bis 5000,
iii) einer oder mehreren Verbindungen mit einer durch Neutralisation kationischen Gruppe und zwei gegenüber Isocyanaten funktionellen Gruppen,
iv) gegebenenfalls einer oder mehreren Polyhydroxylverbindungen mit einem zahlenmittleren Molekulargewicht Mn von 60 bis unter 400, und das so erhaltene Urethanprepolymer anschließend umgesetzt wird
v) mit einer oder mehreren Verbindungen, die eine oder mehrere ethylenisch ungesättigte (meth)acrylische Gruppen und eine gegenüber Isocyanat reaktive Gruppen aufweisen, ausgewählt aus Hydroxyalkyl(meth)acrylaten, Aminoalkyl(meth)acrylaten und/oder (Meth)aciylamiden und/oder mit einer oder mehreren Verbindungen, die eine mit Isocyanat reaktive Gruppe und eine zur Einführung einer (meth)acrylischen Estergruppe geeignete Gruppe aufweisen und anschließende Umsetzung zur Einführung einer (meth)acrylischen Estergruppe,
vi) und gegebenenfalls mit einer oder mehrerer Verbindungen mit einer oder mehrerer gegenüber Isocyanat reaktiven Gruppen, die keine (meth)acrylischen Doppelbindungen aufweisen,
worauf mit dem Reaktivverdünner a2) verdünnt und unter zumindest teilweiser Neutralisation in die wäßrige Phase überführt wird.

4. Verfahren zur Elektrotaucblackierung von elektrisch leitfähigen Substraten durch Eintauchen in einen wäßrigen Elektrotauchlack, Schalten des Substrats als Kathode und Härten des abgeschiedenen Films, **dadurch gekennzeichnet, daß** man einen Elektrotauchlack nach einem der Ansprüche 1 oder 2 verwendet und die Härtung mittels energiereicher Strahlung durchführt.

5. Verfahren nach Anspruchs, **dadurch gekennzeichnet, daß** zusätzlich thermisch gehärtet wird.

6. Lackiertes Substrat, erhalten nach dem Verfahren von Anspruch 4 oder 5.

7. Verwendung der Elektrotauchlacke nach einem der Ansprüche 1 oder 2 zur Elektrotauch-Lackierung von elektrisch leitfähigen Substraten.

8. Verwendung der Elektrotauchlacke nach einem der Ansprüche 1 oder 2 zur Erstellung von Mehrschichtlackierungen.

## Claims

1. Aqueous electrodeposition paint capable of being deposited cataphoretically, containing
A) an aqueous dispersion containing one or more cationically modified polyurethane (meth)acrylates (a1) with terminal, ethylenically unsaturated (meth)acrylic double bonds, and one or more reactive thinners (a2) with at least two ethylenically unsaturated (meth)acrylic double bonds, the (meth)acrylic double bonds of the mixture of (a1) and (a2) corresponding to a bromine number of 20 to 150 g bromine/100 g solids, and the aqueous dispersion being obtainable by preparing the polyurethane (meth)acrylate (a1) by producing a urethane prepolymer with terminal NCO groups, by reacting:
i) one or more aliphatic, cycloaliphatic, araliphatic and/or aromatic polyisocyanates, aromatic polyisocyanates having a molecular weight of more than 174,
ii) one or more polyhydroxyl compounds with a number average molecular weight Mn of 400 to 5000,
iii) one or more compounds having a group that is cationic by neutralisation and two groups that are functional towards isocyanates,
iv) optionally one or more polyhydroxyl compounds with a number average molecular weight Mn of 60 to less than 400,
and subsequent reaction of the urethane prepolymer thus obtained
(v) with one or more compounds which have one or more ethylenically unsaturated (meth)acrylic groups and one or more groups that are reactive towards isocyanates, selected from hydroxyalkyl (meth)acrylates, aminoalkyl (meth)acrylates and/or (meth)acrylamides and/or with one or more compounds having one group that is reactive with isocyanate and one group that is suitable for introducing a (meth)acrylic ester group, and subsequent reaction for the introduction of a (meth)acrylic ester group,
(vi) and optionally with one or more compounds with one or more groups that are reactive towards isocyanate, having no (meth)acrylic double bonds,
after which dilution is performed with the reactive thinner a2) and the mixture is transferred into the aqueous phase with at least partial neutralisation,
the aqueous polyurethane dispersion containing
40 to 85 wt.% of component a1) and
15 to 60 wt.% of component a2), based in each case on the solids content of component A), and the solids content being 30 to 70 wt.%,
B) optionally one or more photoinitiators and optionally one or more free-radical initiators capable of thermal activation,
the terminal, ethylenically unsaturated (meth)acrylic double bonds of the polyurethane (meth)acrylates being bonded with the cationically modified polyurethane prepolymer via urethane, urea, amide or ester groups,
and optionally conventional auxiliary substances and additives, pigments and/or fillers.

2. Electrodeposition paint according to claim 1, **characterised in that** the bromine number of component (a1) is 4 to 80 g bromine/100 g solid resin.

3. Process for the production of an aqueous dispersion
A) suitable for electrodeposition paints according to one of claims 1 or 2, **characterised in that** a urethane prepolymer with terminal NCO groups is produced by reacting
i) one or more aliphatic, cycloaliphatic, araliphatic and/or aromatic polyisocyanates, aromatic polyisocyanates having a molecular weight of more than 174,
ii) one or more polyhydroxyl compounds with a number average molecular weight Mn of 400 to 5000,
iii) one or more compounds having a group that is cationic by neutralisation and two groups that are functional towards isocyanates,
iv) optionally one or more polyhydroxyl compounds with a number average molecular weight Mn of 60 to less than 400,
and the urethane prepolymer thus obtained is then reacted
(v) with one or more compounds which have one or more ethylenically unsaturated (meth)acrylic groups and one group that is reactive towards isocyanate, selected from hydroxyalkyl (meth)acrylates, aminoalkyl (meth)acrylates and/or (meth)acrylamides, and/or with one or more compounds having one group that is reactive with isocyanate and one group that is suitable for introducing a (meth)acrylic ester group, and subsequent reaction for the introduction of a (meth)acrylic ester group,
(vi) and optionally with one or more compounds with one or more groups that are reactive towards isocyanate, having no (meth)acrylic double bonds,
after which dilution is performed with the reactive thinner a2) and the mixture is transferred into the aqueous phase with at least partial neutralisation.

4. Process for the electrodeposition painting of electrically conductive substrates by immersing in an aqueous electrodeposition paint, connecting the substrate as cathode and curing the deposited film, **characterised in that** an electrodeposition paint according to one of claims 1 or 2 is used and the curing is performed by means of high-energy radiation.

5. Process according to claim 5, **characterised in that** thermal curing is additionally performed.

6. Painted substrate obtained by the process of claim 4 or 5.

7. Use of the electrodeposition paints according to one of claims 1 or 2 for the electrodeposition painting of electrically conductive substrates.

8. Use of the electrodeposition paints according to one of claims 1 or 2 for the production of multi-coat finishes.

## Revendications

1. Laque électrophorétique par immersion aqueuse, précipitable à la cathode, contenant
A) une dispersion aqueuse, qui contient un ou plusieurs (méth)acrylates de polyuréthane (a1) modifiés au plan cationique avec des doubles liaisons (méth)acryliques non saturées au plan éthylénique et terminales, et un ou plusieurs diluants réactifs (a2) comprenant au moins deux doubles liaisons (méth)acryliques non saturées au plan éthylénique, les doubles liaisons (méth)acryliques du mélange constitué de (a1) et de (a2) correspondant à un indice de brome de 20 à 150 g de brome/100 g de solide, et la dispersion aqueuse étant obtenue par préparation du (méth)acrylate de polyuréthane (a1), par fabrication d'un prépolymère d'uréthane avec des groupes NCO terminaux, par transformation de
i) un ou plusieurs polyisocyanates aliphatiques, cycloaliphatiques, araliphatiques et/ou aromatiques, des polyisocyanates aromatiques présentant un poids moléculaire supérieur à 174,
ii) un ou plusieurs composés de polyhydroxyle avec un poids moléculaire Mn moyen de 400 à 5000,
iii) un ou plusieurs composés avec un groupe cationique par neutralisation et deux groupes fonctionnels par rapport à des isocyanates,
iv) éventuellement un ou plusieurs composés de polyhydroxyle avec un poids moléculaire Mn moyen de 60 jusqu'à moins de 400, et transformation consécutive du prépolymère d'uréthane ainsi obtenu
v) avec un ou plusieurs composés, qui présentent un ou plusieurs groupes (méth)acryliques non saturés au plan éthylénique et un ou plusieurs groupes réactifs par rapport à l'isocyanate, sélectionnés à partir de (méth)acrylates d'hydroxyalkyle, de (méth)acrylates de aminoalkyle et/ou de (méth)acrylamides et/ou avec un ou plusieurs composés, qui présentent un groupe réactif avec de l'isocyanate et un groupe approprié pour l'introduction d'un groupe d'ester (méth)acrylique et conversion consécutive pour l'introduction d'un groupe d'ester (méth)acrylique,
vi) et éventuellement avec un ou plusieurs composés avec un ou plusieurs groupes réactifs par rapport à l'isocyanate, qui ne présentent pas des doubles liaisons (méth)acryliques,
après quoi on dilue avec le diluant réactif a2) et on transfère avec une neutralisation au moins partielle dans la phase aqueuse,
la dispersion de polyuréthane aqueuse contenant 40 à 85 % en poids du composant a1) et 15 à 60 % du composant a2), rapporté à chaque fois à l'extrait sec du composant a) et l'extrait sec représentant 30 à 70 % du poids,
B) éventuellement un ou plusieurs photoinitiateurs et éventuellement un ou plusieurs initiateurs de radical activables thermiquement,
les doubles liaisons (méth)acryliques non saturés au plan éthylénique et terminaux des (méth)acrylates de polyuréthane étant reliés au moyen de groupes d'uréthane, d'urée, d'amide ou d'ester aux prépolymères de polyuréthane modifiés au plan cationique,
et éventuellement des produits auxiliaires et supplémentaires classiques, des pigments et/ou des matières de charge.

2. Laque électrophorétique par immersion selon la revendication 1, **caractérisé en ce que** l'indice de brome du composant (a1) est de 4 à 80 g de brome/100 g de résine solide.

3. Procédé pour la fabrication d'une dispersion A) aqueuse appropriée pour des laques électrophorétiques par immersion selon l'une quelconque des revendications 1 ou 2, **caractérisé en ce qu'**un prépolymère d'uréthane est fabriqué avec des groupes NCO terminaux par la transformation de
i) un ou plusieurs polyisocyanates aliphatiques, cycloaliphatiques, araliphatiques et/ou aromatiques, des polyisocyanates aromatiques présentant un poids moléculaire supérieur à 174,
ii) d'un ou de plusieurs composés de polyhydroxyle avec un poids moléculaire Mn moyen de 400 à 5000,
iii) d'un ou de plusieurs composés avec un groupe cationique par neutralisation et deux groupes fonctionnels par rapport à des isocyanates,
iv) d'éventuellement un ou plusieurs composés de polyhydroxyle avec un poids moléculaire Mn moyen de 60 jusqu'à moins de 400, et le prépolymère d'uréthane ainsi obtenu étant converti ensuite
v) avec un ou plusieurs composés, qui présentent un ou plusieurs groupes (méth)acryliques non saturés au plan éthylénique et un groupe réactif par rapport à l'isocyanate, sélectionné parmi des (méth)acrylates d'hydroxyalkyle, des (méth)acrylates de aminoalkyle et/ou des (méth)acrylamides et/ou avec un plusieurs composés qui présentent un groupe réactif avec de l'isocyanate et un groupe approprié pour l'introduction d'un groupe d'ester (méth)acrylique et conversion consécutive pour l'introduction d'un groupe d'ester (méth)acrylique,
vi) et éventuellement avec un ou plusieurs composés avec un ou plusieurs groupes réactifs par rapport à l'isocyanate, qui ne présentent pas des doubles liaisons (méth)acryliques,
après quoi on dilue avec le diluant réactif a2) et on transfère dans la phase aqueuse avec une neutralisation au moins partielle.

4. Procédé pour le laquage électrophorétique de substrats électroconducteurs par immersion dans une laque électrophorétique aqueuse, commande du substrat comme cathode et durcissement du film précipité, **caractérisé en ce qu'**on utilise une laque électrophorétique par immersion selon l'une quelconque des revendications 1 ou 2 et qu'on effectue le durcissement au moyen de rayonnement riche en énergie.

5. Procédé selon la revendication 4, **caractérisé en ce qu'**on effectue en supplément un durcissement thermique.

6. Substrat laqué, selon le procédé de la revendication 4 ou 5.

7. Utilisation des laques électrophorétiques par immersion selon l'une quelconque des revendications 1 ou 2, pour le laquage électrophorétique par immersion de substrats électroconducteurs.

8. Utilisation des laques électrophorétiques par immersion selon l'une quelconque des revendications 1 ou 2 pour l'élaboration de peintures à plusieurs couches.
